# EUROPEAN PATENT APPLICATION

(11) **EP 4 535 166 A1**
(43) Date of publication of application: **09.04.2025**
(21) Application number: 23834401.4
(22) Date of filing: 15.03.2023
(51) Int. Cl.: G06F 9/451

(54) **DESKTOP CLOUD SERVICE APPLICATION CONTROL METHOD AND DEVICE**

(30) Priority: 08.07.2022 CN 202210807081
(71) Applicant: Huawei Cloud Computing Technologies Co., Ltd., Guiyang, Guizhou 550025 (CN)
(72) Inventor: HUANG, Jiaping, Guiyang, Guizhou 550025 (CN); LIU, Wanlai, Guiyang, Guizhou 550025 (CN); CAO, Hanping, Guiyang, Guizhou 550025 (CN)
(74) Representative: Maiwald GmbH
(86) International application number: PCT/CN2023/081680
(87) International publication number: WO 2024/007617

(57) **Abstract**

This application relates to the field of cloud computing technologies, and in particular, to a method for controlling a cloud desktop service application and a device. According to the method, a time at which a user arrives at an office location is estimated based on punch-in data of the user, for example, a punch-in location and a punch-in time, and a cloud desktop service is enabled before the user arrives at the office location, so that after arriving at the office location, the user can use the cloud desktop service without waiting for enabling of the cloud desktop service. Similarly, according to the method, a time at which the user leaves the office location may be estimated based on punch-out data of the user, for example, a punch-out time and a punch-out location, and the cloud desktop service is disabled after it is determined that the user leaves the office location. In addition, according to the method, when it is determined that the user leaves the office location, working data of a cloud desktop can also be saved, so that when the cloud desktop service is automatically enabled next time, a working state of the cloud desktop can be quickly restored based on the working data, and the user quickly enters an office state.

## Description

This application claims priority to Chinese Patent Application No. 2022108070810, filed with the China National Intellectual Property Administration on July 8, 2022 and entitled "METHOD FOR CONTROLLING CLOUD DESKTOP SERVICE APPLICATION AND DEVICE", which is incorporated herein by reference in its entirety.

### TECHNICAL FIELD

This application relates to the field of cloud computing technologies, and in particular, to a method for controlling a cloud desktop service application and a device.

### BACKGROUND

With rapid development of cloud computing, a cloud desktop service (cloud desktop service) application (referred to as "cloud desktop service" below) is widely used. The cloud desktop service is a cloud application that allows a user to access cross-platform applications and a virtual desktop through a cloud desktop terminal. To be specific, the user needs only one cloud desktop terminal, and can access, by using a dedicated program (for example, a cloud desktop application) or a browser, a virtual desktop and various applications residing on a cloud desktop server.

In a cloud desktop office scenario, the user needs to disable the cloud desktop service of the cloud desktop terminal when being off work, and enable the cloud desktop service when being on work, to access the virtual desktop by using the cloud desktop service and start an office application of the virtual desktop. To avoid spending too much time starting the office application by using the cloud desktop service, some users do not even disable the cloud desktop service when being off work. Therefore, how to efficiently and conveniently use the cloud desktop service to start the office application becomes a problem to be resolved.

### SUMMARY

This application provides a method for controlling a cloud desktop service application and a device. According to the method for controlling a cloud desktop service application in this application, a time at which a user arrives at an office location is estimated based on punch-in data of the user, for example, a punch-in location and a punch-in time, and a cloud desktop service is enabled before the user arrives at the office location, so that after arriving at the office location, the user can use the cloud desktop service without waiting for enabling of the cloud desktop service.

Similarly, according to the method, a time at which the user leaves the office location may be estimated based on punch-out data of the user, for example, a punch-out time and a punch-out location, and the cloud desktop service is disabled after it is determined that the user leaves the office location. In addition, according to the method, when it is determined that the user leaves the office location, working data of a cloud desktop can also be saved, so that when the cloud desktop service is automatically enabled next time, a working state of the cloud desktop can be quickly restored based on the working data, and the user quickly enters an office state.

Details are described below.

According to a first aspect, an embodiment of this application provides a method for controlling a cloud desktop service application, applied to a first electronic device, where the cloud desktop service application is installed on a first desktop of the first electronic device, and the first electronic device is located at a first location. The method includes: receiving first clock-punching data sent by a terminal device, where the first clock-punching data includes a first clock-punching time and a clock-punching location of a user, and the clock-punching location is a geographical location of the terminal device at the first clock-punching time; determining a start time of the cloud desktop service application based on the first clock-punching data and the first location; and starting the cloud desktop service application based on the start time.

In some implementations, the first electronic device is a cloud desktop terminal device, and includes but is not limited to a device such as a smartphone, a tablet computer, or a desktop computer. The terminal device is a device used by the user to punch the clock, for example, a smartphone, a tablet computer, or a punching machine disposed at different locations, for example, a fingerprint punching machine, an iris punching machine, or a facial recognition punching machine. This is not limited in this application.

In some implementations, the first electronic device displays the first desktop, the cloud desktop service application is installed on the first desktop, and the user may enable the cloud desktop service by using the cloud desktop service application on the first desktop. The first electronic device is located at the first location, where the first location refers to a location of the first electronic device. Generally, it may be understood that the first location is consistent with an office location of the user.

In some implementations, the first clock-punching data includes the first clock-punching time and the clock-punching location of the user. In addition, it may be understood that the clock-punching location is a geographical location of the terminal device at the first clock-punching time. For example, if the user punches the clock on a shuttle bus at 8:00 a.m. by using a punching machine of the shuttle bus, the clock-punching location is a geographical location of the punching machine at 8:00 a.m., that is, a geographical location of the shuttle bus at 8:00 a.m.

According to the foregoing method, after receiving the first clock-punching data of the user, the first electronic device may determine, based on the geographical location of the user at the first clock-punching time and the first location of the first electronic device, a start time of starting the cloud desktop service application, and start the cloud desktop service application based on the start time, thereby implementing an effect of automatically starting the cloud desktop service application. In addition, it may be understood that, when the cloud desktop service application is started before the user arrives at the first location, a time spent by the user waiting for the cloud desktop service application may be naturally saved, thereby improving user experience.

With reference to the first aspect, in a possible implementation of the first aspect, after the starting the cloud desktop service application, the method further includes: obtaining a second desktop from a second electronic device, and displaying the second desktop in the cloud desktop service application.

In some implementations, the second electronic device is a cloud desktop server, and includes but is not limited to various types of servers. The second desktop is a virtual desktop deployed on the second electronic device. On the second desktop, various applications required by the user are installed, for example, an application such as office software. The user may run the application on the second desktop by clicking, to implement a corresponding function.

In some implementations, after the cloud desktop service application is started, the first electronic device further obtains the second desktop from the second electronic device, and displays the second desktop on the first electronic device. More specifically, the second desktop is displayed in the cloud desktop service application.

With reference to the first aspect and the possible implementations of the first aspect, the method further includes: receiving second clock-punching data sent by the terminal device, and closing the cloud desktop service application.

In other words, after receiving the second clock-punching data sent by the terminal device, the first electronic device automatically closes the cloud desktop service application. In some implementations, the second clock-punching data includes a second clock-punching time. Correspondingly, after receiving the second clock-punching data, the first electronic device determines, based on the second clock-punching time of the second clock-punching data, to close the cloud desktop service application.

It is not difficult to understand that, when the second clock-punching time is later than a time at which the user leaves the first location, the cloud desktop service may be naturally disabled after the user leaves the first location, to reduce costs of using the cloud desktop service.

With reference to the first aspect and the possible implementations of the first aspect, the method further includes: receiving second clock-punching data sent by the terminal device, and controlling the second electronic device to save working data that corresponds to the second desktop and that exists when the cloud desktop service application is closed.

In some implementations, when the cloud desktop service application is closed, the first electronic device may further control the second electronic device to save working data that corresponds to the second desktop and that exists when the cloud desktop service application is closed. In some implementations, the working data includes data corresponding to an application running on the second desktop, an opened file, an opened project, or the like.

In this manner, when starting the cloud desktop service application next time, the first electronic device can restore a working state of the second desktop based on the foregoing working data, for example, open an application running on the second desktop or a file that is opened when the cloud desktop service application is closed, so that the user may quickly enter an office state.

With reference to the first aspect and the possible implementations of the first aspect, the start time is determined based on a distance between the first location and the clock-punching location, a travel manner of the user, and the first clock-punching time.

In some implementations, duration required by the user from the clock-punching location to the first location may be determined based on the travel manner of the user and a distance between the clock-punching location and the first location, then the start time is determined based on the first clock-punching time, and then the cloud desktop service application is started based on the start time.

In this manner, it can be ensured that the cloud desktop service application is started before the user arrives at the first location, thereby reducing a time for the user to wait for the cloud desktop service application to be started, and improving user experience.

With reference to the first aspect and the possible implementations of the first aspect, the method further includes: saving closing duration consumed for closing the cloud desktop service application.

Similarly, to further reduce waiting duration of the user, the first electronic device may further save the closing duration consumed for closing the cloud desktop service application, so that when the cloud desktop service application is started next time, duration for restoring the working state of the second desktop is also used as a factor for determining the start time. In this way, the user does not even need to manually start a required application on the second desktop, and does not need to wait for the required application on the second desktop to be started.

With reference to the first aspect and the possible implementations of the first aspect, the start time is determined based on the distance between the first location and the clock-punching location, the travel manner of the user, the first clock-punching time, and the closing duration.

With reference to the first aspect and the possible implementations of the first aspect, before the determining a start time of the cloud desktop service application based on the first clock-punching data and the first location, the method further includes: determining that the first clock-punching time is a current-day on-work time of the user, where the current-day on-work time is a time with a difference from a first preset time less than a first threshold.

In some implementations, the first clock-punching data is user punch-in data, and includes the first clock-punching time (a punch-in time) and the clock-punching location of the user. In addition, it may be understood that the clock-punching location is a geographical location of the terminal device at the first clock-punching time. For example, if the user punches the clock on a shuttle bus at 8:00 a.m. by using a punching machine of the shuttle bus, the clock-punching location is a location of the punching machine at 8:00 a.m., that is, a location of the shuttle bus at 8:00 a.m.

However, the first preset time refers to a normal or usual on-work time of the user that is determined based on a historical on-work time of the user within a time. It may be understood that, when the first electronic device detects that a difference between the first clock-punching time corresponding to the first clock-punching data and the first preset time is less than the first threshold, it may indicate that the first clock-punching time corresponding to the first clock-punching data is an on-work time of the user this time.

In this way, the cloud desktop service application may be automatically started before the user is on work and before the user arrives at the first location, thereby reducing a time for the user to wait for the cloud desktop service application to be started.

With reference to the first aspect and the possible implementations of the first aspect, the second clock-punching data includes the second clock-punching time of the user, and before the closing the cloud desktop service application, the method further includes: determining that the second clock-punching time is a current-day off-work time of the user, where the current-day off-work time is a time with a difference from a second preset time less than a second threshold.

Similarly, in some implementations, the second clock-punching data may be the punch-out data of the user, and the second clock-punching time is the punch-out time of the user. A manner for determining whether the second clock-punching time is the punch-out time of the user and a manner for determining whether the first clock-punching time is the punch-in time of the user have a same principle, that is, a usual off-work time (the second preset time) of the user is obtained by collecting statistics on a historical off-work time of the user, and when a difference between the second clock-punching time and the second preset time is less than the second threshold, it is considered that clock-punching data obtained this time is punch-out data of the user, that is, the second clock-punching time is an off-work time of the user this time.

In this way, the cloud desktop service application may be automatically closed when the user is on work and after the user leaves the first location, thereby reducing costs of using the cloud desktop service application.

With reference to the first aspect and the possible implementations of the first aspect, the method further includes: if second clock-punching data is not received within third preset duration after a second preset time, closing the cloud desktop service application.

It may be understood that, to avoid a case that the first electronic device does not receive the second clock-punching data because the user forgets to punch out or because of another reason, if the second clock-punching data is still not received within the third preset duration after the usual off-work time of the user, it is considered by default that the user forgets to punch out, and the cloud desktop service application is closed, to reduce costs of using the cloud desktop service application.

According to a second aspect, an embodiment of this application further provides a computing device cluster. The computing device cluster includes at least one computing device. Each computing device includes a processor and a memory.

The processor of the at least one computing device is configured to execute an instruction stored in the memory of the at least one computing device, so that the computing device cluster performs the method according to any one of the possible implementations of the first aspect.

According to a third aspect, an embodiment of this application further provides an electronic device, where the electronic device includes a memory, storing a computer program instruction; and a processor, where the processor is coupled to the memory, and when the computer program instruction stored in the memory is executed by the processor, the electronic device is enabled to implement the method according to any one of the possible implementations of the first aspect.

According to a fourth aspect, an embodiment of this application provides a computer-readable storage medium. The computer-readable storage medium stores a computer program, and when the computer program is executed by a processor, the method according to any one of the possible implementations of the first aspect is implemented.

According to a fifth aspect, an embodiment of this application provides a computer program product. When the computer program product runs on an electronic device, the electronic device is enabled to perform the method according to any one of the possible implementations of the first aspect.

It may be understood that, for beneficial effects of the second aspect to the fifth aspect, refer to related descriptions in the first aspect. Details are not described herein again.

### BRIEF DESCRIPTION OF DRAWINGS

To describe the technical solutions in embodiments of this application more clearly, the following briefly describes the accompanying drawings for describing embodiments. It is clear that the accompanying drawings in the following descriptions show merely some embodiments of this application, and a person of ordinary skill in the art may still derive other drawings from these accompanying drawings without creative efforts.
FIG. 1 is a diagram of a usage scenario of a cloud desktop service according to an embodiment of this application;
FIG. 2 is a diagram of another usage scenario of a cloud desktop service according to an embodiment of this application;
FIG. 3 is a diagram of still another usage scenario of a cloud desktop service according to an embodiment of this application;
FIG. 4 is a diagram of yet another usage scenario of a cloud desktop service according to an embodiment of this application;
FIG. 5 is a diagram of a control system of a cloud desktop service application according to an embodiment of this application;
FIG. 6 is a diagram of an interactive process between devices in FIG. 5 involved in implementing a method in this application according to an embodiment of this application;
FIG. 7 is a diagram of a user punching the clock according to an embodiment of this application;
FIG. 8 is a diagram of a user punching the clock according to an embodiment of this application;
FIG. 9 is a diagram of another interactive process between devices in FIG. 5 involved in implementing a method in this application according to an embodiment of this application;
FIG. 10 is a schematic flowchart of a method according to an embodiment of this application;
FIG. 11 is a schematic flowchart of another method according to an embodiment of this application;
FIG. 12 is a diagram of a structure of an electronic device 1200 according to an embodiment of this application;
FIG. 13 is a diagram of a structure of an electronic device 1300 according to an embodiment of this application;
FIG. 14 is a diagram of a structure of a device cluster according to an embodiment of this application, where the device cluster includes a plurality of computing devices 1400; and
FIG. 15 is a diagram of a structure of interaction between devices according to an embodiment of this application, including a computing device 1500A and a computing device 1500B.

### DESCRIPTION OF EMBODIMENTS

Aspects of the illustrative embodiments are described below using terms commonly used by a person skilled in the art.

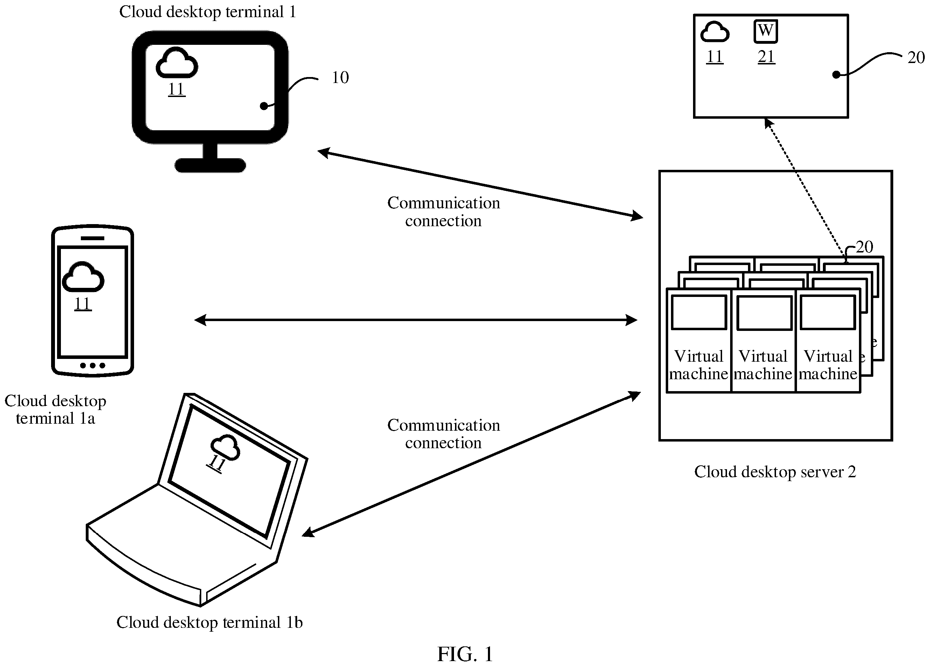

A cloud desktop service is a service that allows a user to access cross-platform applications and a virtual desktop through a cloud desktop terminal. For example, in a cloud desktop system shown in FIG. 1, the system includes a plurality of types of cloud desktop terminals (for example, a cloud desktop terminal 1, a cloud desktop terminal 1a, and a cloud desktop terminal 1b), and a cloud desktop server 2. In some implementations, the cloud desktop terminal includes but is not limited to an electronic device such as a desktop computer, a notebook computer, a tablet computer, or a smartphone. This is not limited in this application. Each cloud desktop terminal may communicate with the cloud desktop server 2. A cloud desktop service application 11 (referred to as "cloud desktop application" below) is installed on each cloud desktop terminal. The cloud desktop server 2 provides a dedicated virtual machine for each cloud desktop terminal, and deploys, in the virtual machine, an operating system and various applications required by a user, for example, a cloud desktop application 11, an office application 21, a video application, a game application, and a shopping application. Then, the user uses the applications by using the cloud desktop terminal in a form of a virtual machine desktop, and the user may access a corresponding virtual machine desktop on a cloud desktop terminal. In some implementations, the office application 21 includes but is not limited to a document application, a programming application, an image processing application, and the like. This is not limited in this application either.

A cloud desktop terminal 1 which represents the cloud desktop terminal and a document application 21 are used as an example. A user may start the cloud desktop application 11 on a first desktop 10 of the cloud desktop terminal 1, access a second desktop 20 (that is, a virtual machine desktop) of a cloud desktop server 20 by using the cloud desktop application 11, and then start the document application 21 on the second desktop 20, to implement a function related to the document application 21.

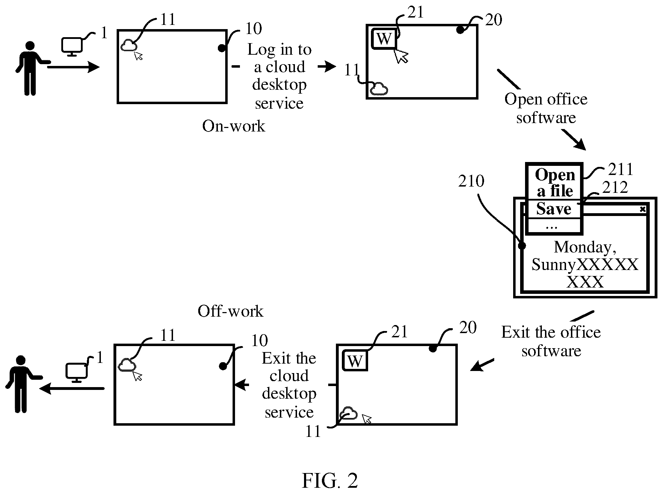

Specifically, FIG. 2 is a diagram of an application scenario in which a user uses a cloud desktop service in an office scenario. As shown in FIG. 2, when being on work, a user starts a cloud desktop terminal 1, clicks a cloud desktop application 11 installed on a first desktop 10 to start a cloud desktop service, and accesses a second desktop 20 of a cloud desktop server 2 by using the cloud desktop service. After clicking and running a document application 21, the user may click a related control in the document application 21, for example, open a file control 211, to open an office file required for processing.

When the user is off work, the user may also click a related control in the document application 21, for example, a saving control 212, to save current content of the file, and then exit the document application 21. In this case, the second desktop 20 is displayed on the cloud desktop terminal 1, the user may exit the cloud desktop service on the second desktop 20 by using the cloud desktop application 11, the cloud desktop terminal 1 displays the first desktop 10, and finally the user closes the cloud desktop terminal 1.

In the foregoing process, the user needs to start the cloud desktop application 11 on the first desktop 10 to log in to the cloud desktop service, enter the second desktop 20, and click and run the document application 21 on the second desktop 20 each time before opening a file that needs to be processed. At the end of the work, the user needs to close the document application 21, exit the cloud desktop service, and close the cloud desktop terminal 1 in sequence. In this process, the user needs to spend time waiting for the cloud desktop service to be enabled and opening the document application 21, which affects user experience. However, to reduce a waiting time, some users do not close the document application 21 even before exiting the cloud desktop service, so that next time the user may quickly enter a working state existing when leaving an office location. However, because the document application 21 is on the cloud desktop server 2, this enables the cloud desktop terminal 1 to keep a connection to the cloud desktop server 2 for a long time, and increases use duration of the cloud desktop service. In addition, the cloud desktop service is generally charged based on use duration. As a result, this manner also increases costs of using the cloud desktop by the user. In some implementations, the office location may be a location of the cloud desktop terminal device 1 of the user, or a work station or an office of the user, or may be a company location of the user. This is not limited in this application. In the following implementations, an example in which the office location is the location of the cloud desktop terminal device 1 is used for description.

In some implementations, to improve user experience and reduce duration for which the user waits for the cloud desktop service to be enabled, some cloud desktop services provide a scheduled power-on and power-off service. To be specific, the scheduled power-on and power-off service is set for the cloud desktop service, so that the cloud desktop service can be enabled and disabled at a fixed time. For example, the cloud desktop service is automatically enabled half an hour before the user is on work, so that the user does not need to enable the cloud desktop service when being on work, and the duration for which the user waits for the cloud desktop service to be enabled is reduced. The cloud desktop service is automatically disabled half an hour after the user is off work, which improves user experience.

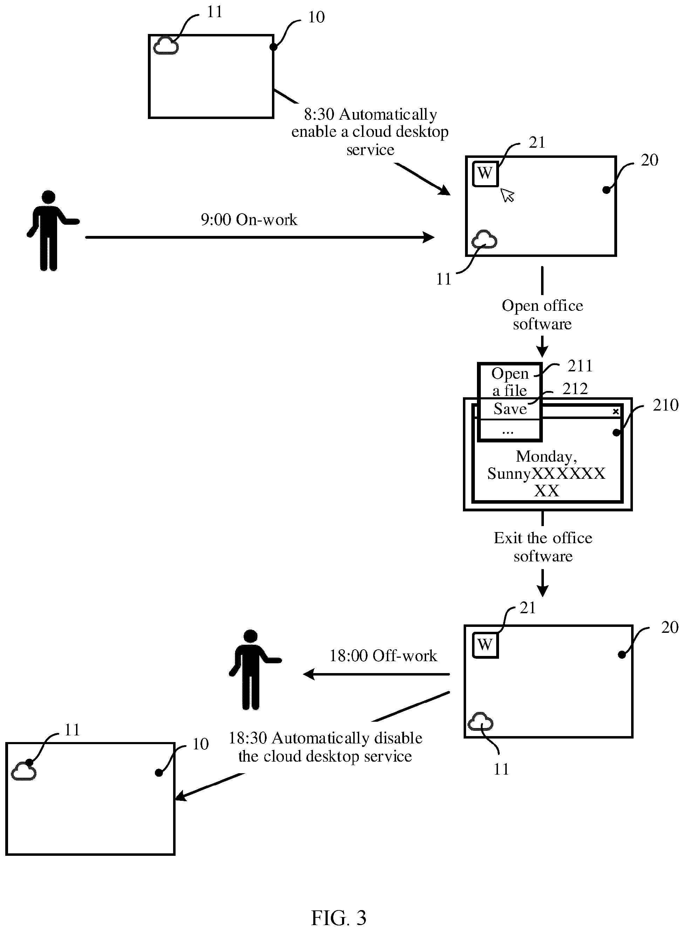

Specifically, FIG. 3 is a diagram of another scenario in which a user uses a cloud desktop service. As shown in FIG. 3, an on-work time of a user is 9:00, and an off-work time is 18:00. To reduce duration for which the user waits for a cloud desktop service to be enabled, before the user arrives at an office location, the cloud desktop service is automatically enabled at 8:30. When the user arrives at the office location, a cloud desktop terminal 1 already displays a second desktop 20, and the user may click and run a document application 21, and then click a corresponding control, for example, a file control 211, to open a to-be-processed document to continue processing. When the user is off work, the cloud desktop service is automatically disabled at 18:30. Before that, the user only needs to exit the document application 21. It may be understood that, if necessary, the user may also manually exit the cloud desktop service before 18:30, which is not limited herein.

The foregoing method may be used to reduce the duration for which the user waits for the cloud desktop service to be enabled, and also help improve user experience through setting of automatically enabling and disabling the cloud desktop service. However, the foregoing method can be used only in a fixed time period. For a scenario in which a user does not work in a fixed time, for example, the user sometimes works at 9:00 and sometimes works at 8:00, in a case that the user comes to work at 8:00, the user still needs to manually enable the cloud desktop service on a first desktop 10 to enter the second desktop 20, and then start the document application 21 to work, that is, the user still needs to wait for the cloud desktop service to be enabled, which affects user experience.

In addition, in a case that the off-work time of the user is later than the time of automatically disabling the cloud desktop service, the cloud desktop service is still automatically disabled at 18:30. In this case, if the cloud desktop service is implemented by using a third-party application, the user needs to manually cancel automatic disabling of the cloud desktop service. However, in a scenario with high privacy such as an office, installing the third-party application on the cloud desktop terminal 1 is not conducive to protecting user information. If the cloud desktop service is implemented not by using the third-party application, the user cannot manually disable the cloud desktop service. This may naturally affect normal work of the user.

In addition, it can be learned from the application scenarios shown in FIG. 2 and FIG. 3 that, after the cloud desktop service is enabled, and after the user starts the document application 21 on the second desktop 20, the user further needs to open a file that is unfinished last time before continuing processing the file. Similarly, in a case that the user uses another application, if the user exits the application, the user also needs to start the application and open a project that is unfinished last time before continuing processing. This operation process undoubtedly also consumes time of the user.

To resolve the foregoing technical problem, this application provides a method for controlling a cloud desktop service application. According to the method, a time at which a user arrives at an office location is estimated based on punch-in data of the user, for example, a punch-in location and a punch-in time, and a cloud desktop service is enabled before the user arrives at the office location, so that after arriving at the office location, the user can use the cloud desktop service without waiting for enabling of the cloud desktop service. Similarly, according to the method, a time at which the user leaves the office location may be estimated based on punch-out data of the user, for example, a punch-out time and a punch-out location, and the cloud desktop service is disabled after it is determined that the user leaves the office location.

In addition, according to the method, when it is determined that the user leaves the office location, a current working state of a second desktop 20, including working data such as running data of each application, an opened file, and a memory resource occupied in a running process of the application, may be further stored in a memory of a cloud desktop server 2. When the cloud desktop service is automatically enabled next time, the cloud desktop server 2 reads, from the memory, the working data corresponding to the second desktop 20 last time, and restores the working state of the second desktop 20, so that the user quickly enters an office state.

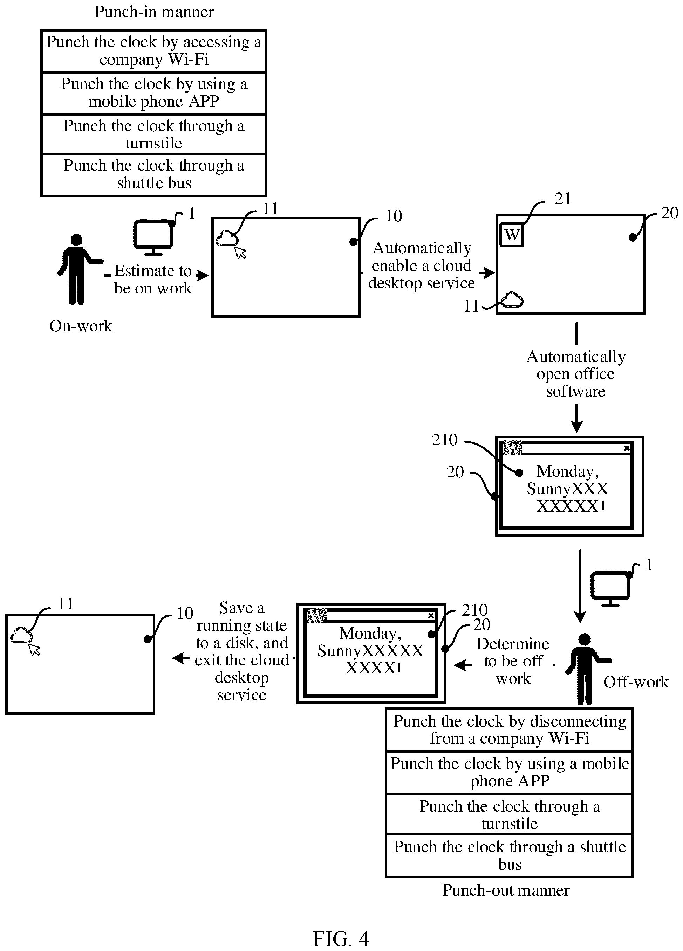

Specifically, FIG. 4 is a diagram of still another scenario of a cloud desktop service application. As shown in FIG. 4, a cloud desktop terminal 1 estimates, based on punch-in data of a user, for example, a time at which the user accesses a wireless network (wireless fidelity, Wi-Fi) of a company at work, a location and a time at which the user punches in by using a mobile phone application (application, APP), a time at which the user punches in by using a company turnstile, or a time at which the user punches in by taking a shuttle bus, a time at which the user arrives at an office location, then automatically enables a cloud desktop service to display a second desktop 20 before the user arrives at the office location, and restores to a working state existing when the user left last time. Then, when the user is off work, and similarly, after it is determined, based on punch-out data of the user, for example, a time at which the user disconnects from the company Wi-Fi, a location and a time at which the user punches out by using the mobile phone APP, a time at which the user punches out through the company turnstile, or a time at which the user punches out by taking the shuttle bus, that the user leaves the office location, a current working state of the second desktop 20 is automatically saved and stored to a memory of a cloud desktop server 2, and the cloud desktop service is exited. In this way, after the cloud desktop service of the user is automatically enabled, the cloud desktop terminal 1 may display the second desktop 20 and restore to the working state of the second desktop 20 existing when the user left the office location last time, so that the user quickly enters an office state.

In some implementations, the punch-in data used to estimate the time at which the user arrives at the office location is obtained by the cloud desktop terminal 1 from a terminal device on which the user punches the clock. In some implementations, the terminal device on which the user punches the clock includes but is not limited to a mobile phone, a punching machine on a shuttle bus, or a punching machine on a turnstile. This is not limited in this application. In some implementations, the punch-in data may be at least one of the following: the time at which the user accesses the company Wi-Fi, the location and the time at which the user punches in by using the mobile phone APP, the time at which the user punches in through the company turnstile, and the time at which the user punches in by taking the shuttle bus. This is not limited in this application. Similarly, the punch-out data used to estimate a time at which the user leaves the office location is also obtained by the cloud desktop terminal 1 from the terminal device on which the user punches the clock. In some implementations, the punch-out data may be at least one of the following: the time at which the user disconnects from the company Wi-Fi, the location and the time at which the user punches out by using the mobile phone APP, the time at which the user punches out through the company turnstile, and the time at which the user punches out by taking the shuttle bus. This is not limited in this application.

In some implementations, the data used to estimate the time at which the user arrives at the office location and the time at which the user leaves the office location includes but is not limited to the foregoing data, or may be other data that can represent that the user is about to arrive at or has left the office location. For example, the user punches the clock by using a fingerprint or an iris before arriving at a work station, or the user manually enters an on/off-work time of the user. For another example, the time at which the user arrives at the office location or the time at which the user leaves the office location may be estimated by using location data of a terminal device bound by the user to a company clock-punching module or a company information technology (information technology, IT) system. For example, the location data of the terminal device of the user is obtained in real time or at an interval, and then the time at which the user arrives at the office location is estimated based on a driving speed corresponding to the user holding the terminal device and a distance between a location of the terminal device and the office location. This is not limited in this application. The terminal device of the user includes but is not limited to a mobile phone, a tablet computer, a personal digital assistant, and the like.

According to the foregoing method, it can be avoided that the user waits for the cloud desktop service to be enabled at work, and after the cloud desktop service is automatically enabled, the cloud desktop terminal 1 automatically restores the working state of the second desktop 20 existing when the user left the office location last time, which is also conducive to quickly entering the office state after the user arrives at the office location, thereby improving user experience.

In addition, when the user is off work, the cloud desktop service is automatically disabled, and a resource of the cloud desktop server 2 is no longer used, thereby reducing invalid use duration of the cloud desktop service, and helping reduce costs of using the cloud desktop service.

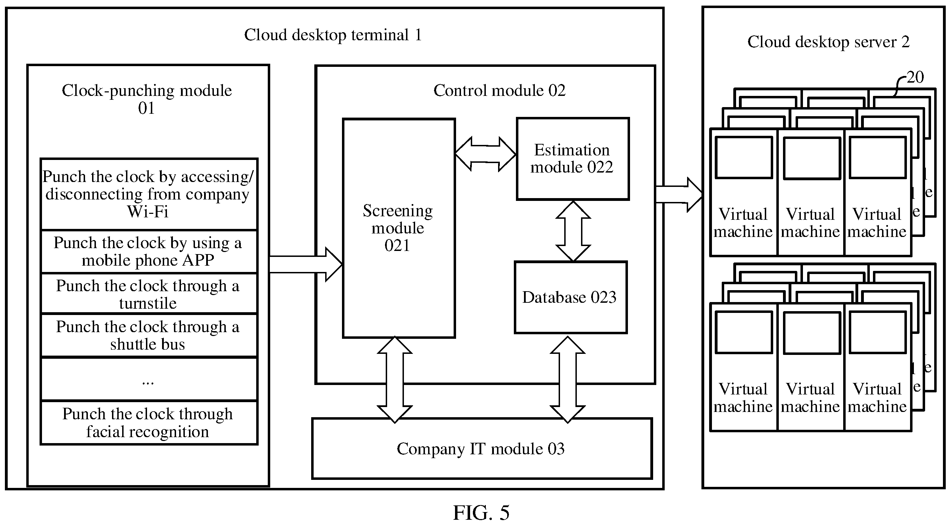

In some implementations of this application, a system for implementing a cloud desktop application method in this application is further provided. Specifically, FIG. 5 is a diagram of a structure of a system of a cloud desktop application method according to this application. As shown in FIG. 5, the system includes a cloud desktop terminal 1 and a cloud desktop server 2, and a clock-punching module 01, a control module 02, and a company IT module 03 are deployed in the cloud desktop terminal 1. In some implementations, the control module 02 in FIG. 5 may also be independently deployed on another electronic device. In this case, the electronic device needs to be authenticated by the cloud desktop terminal 1 before accessing data of the cloud desktop terminal 1. This is not limited in this application. The following uses an example in which the control module 02 is deployed on the cloud desktop terminal 1 for description.

The clock-punching module 01 is configured to collect clock-punching data of a user, and clock-punching data in a working process, or is configured to collect data that may indicate whether the user is about to arrive at or leave an office location. In some implementations, the clock-punching data of the user includes all current-day clock-punching data of the user, for example, current-day data of 1^{st} clock-punching, 2^{nd} clock-punching, ..., and N^{th} clock-punching of the user. In some implementations, the clock-punching data of the user further includes data such as a manner, a location, and a time of clock-punching of the user. This is not limited in this application. For example, data of the user punching the clock on a company shuttle bus by using a work card, data of the user punching the clock through facial recognition, iris recognition, fingerprint recognition, or the like in a company, data of the user punching the clock by using a company turnstile, and data of the user punching the clock when accessing/disconnecting from a company Wi-Fi. This is not limited in this application. In some implementations, when obtaining current-day clock-punching data of the user, the clock-punching module 01 numbers the obtained clock-punching data. For example, a 1^{st} piece of obtained clock-punching data of the user is numbered as 1, a 2^{nd} piece of clock-punching data of the user is numbered as 2, ..., and an N^{th} piece of clock-punching data of the user is numbered as N, to facilitate storage of the clock-punching data. In some implementations, the clock-punching module 01 may be implemented by using software, or may be implemented by using hardware. For example, the clock-punching module 01 may be a terminal device of the user, such as a mobile phone or a tablet computer, may be a punching machine on which the user punches the clock and that is set at different locations, or the like. For another example, the clock-punching module 01 may also be a software module configured to obtain clock-punching data of the user on the terminal device and the punching machine. This is not limited in this application.

When the following describes an implementation process of the method for controlling a cloud desktop service application in this application, for ease of description, the punch-in data of the user is referred to as first clock-punching data, and the punch-out data of the user is referred to as second clock-punching data.

The control module 02 includes a screening module 021, an estimation module 022, and a database 023. The screening module 021 is configured to screen valid clock-punching data of the user based on the clock-punching data of the user collected by the clock-punching module 01 and user data recorded in the company IT module 04. The valid clock-punching data refers to clock-punching data that can indicate that the user arrives at the office location for office work and leaves the office location on a current day. For example, a user A punches in by taking a shuttle bus, but a current-day remark of the user A in the company IT module 04 is "ask for leave". In this case, even if the clock-punching module 01 collects data of the user A punching in by taking a shuttle bus, the screening module 021 removes the data of the user A punching in by taking a shuttle bus, that is, the data of the user A punching in by taking a shuttle bus is not used as valid punch-in data. For another example, if a user B is a new employee, after the user B punches in by accessing a company Wi-Fi, because the company IT module 04 may not record an office location (for example, a work station of the user B) of the employee, the screening module 021 may not use data of the user B punching in by accessing the Wi-Fi as valid punch-in data of the user B. For still another example, after the screening module 021 determines punch-in data of a user C, other clock-punching data (for example, clock-punching data of going out for a rest at noon, and clock-punching data of entering or exiting a tea room or a washroom of the company) of the user C in a normal working time (for example, 9:00-18:00) is not used as punch-out data of the user C.

The estimation module 022 is configured to: estimate, based on the valid clock-punching data of the user, with reference to location data (that is, a clock-punching location) of the user during clock-punching and the office location of the user, duration required for the user to arrive at the office location from the clock-punching location, or estimate a time at which the user arrives at the office location, and then control, based on an estimation result, the control module 02 of a cloud desktop service to enable the cloud desktop service. The office location and the clock-punching location of the user that are used to estimate the duration required for the user to arrive at the office location from the clock-punching location may be obtained by the estimation module 022 from the database 023, or may be obtained by the estimation module 022 from the company IT module 04, or may be obtained by the estimation module 022 from the clock-punching module 01. This is not limited in this application. When the following describes an implementation process of the method for controlling a cloud desktop service application in this application, for ease of description, the office location of the user is referred to as a first location, and a location corresponding to the first clock-punching data of the user is referred to as a second location or a clock-punching location. In some implementations, the clock-punching location is a geographical location of the terminal device at a first clock-punching time. For example, if the user punches the clock on a shuttle bus at 8:00 a.m. by using a punching machine of the shuttle bus, the clock-punching location is a location of the punching machine at 8:00 a.m., that is, a location of the shuttle bus at 8:00 a.m.

The database 023 is a storage module of the control module 02, and is configured to store clock-punching data of the user, such as clock-punching location data, a clock-punching time, and an office location. In some implementations, the database 023 may be an independent storage module, or may be disposed together with another module in the control module 02, for example, the screening module 021 and the estimation module 022. This is not limited in this application.

The control module 02 is configured to: enable the cloud desktop service based on the time that is estimated by the estimation module 022 and at which the user arrives at the office location from the clock-punching location, or disable the cloud desktop service based on a time that is determined by the estimation module 022 and at which the user leaves the office location. In some implementations, the control module 02 is further configured to: when controlling the cloud desktop server 2 to disable the cloud desktop service, control the cloud desktop server 2 to save working data corresponding to a working state of a second desktop 20, for example, the user starts a document application 21, edits a part of a document by using the document application 21, and saves the working data to a memory of the cloud desktop server 2. After determining, next time, that the user is about to arrive at the office location, the control module 02 controls the cloud desktop server 2 to enable the cloud desktop service, obtains, from the cloud desktop server 2, working data of the second desktop 20 corresponding to the cloud desktop terminal 1 of the user, controls the cloud desktop terminal 1 to display the second desktop 20, and restores the working state of the second desktop 20 based on the working data of the second desktop 20. As described above, the second desktop 20 is displayed on the cloud desktop terminal 1 of the user.

The company IT module 04 is mainly configured to record other data of the user other than the clock-punching data, for example, the office location of the user and leave for business data of the user. In some implementations, the company IT module 04 may also record and save the clock-punching data of the user. In this case, the company IT module 04 and the clock-punching module 01 may be combined. This is not limited in this application. For ease of description, data recorded in the company IT module 04 is referred to as first data in the following.

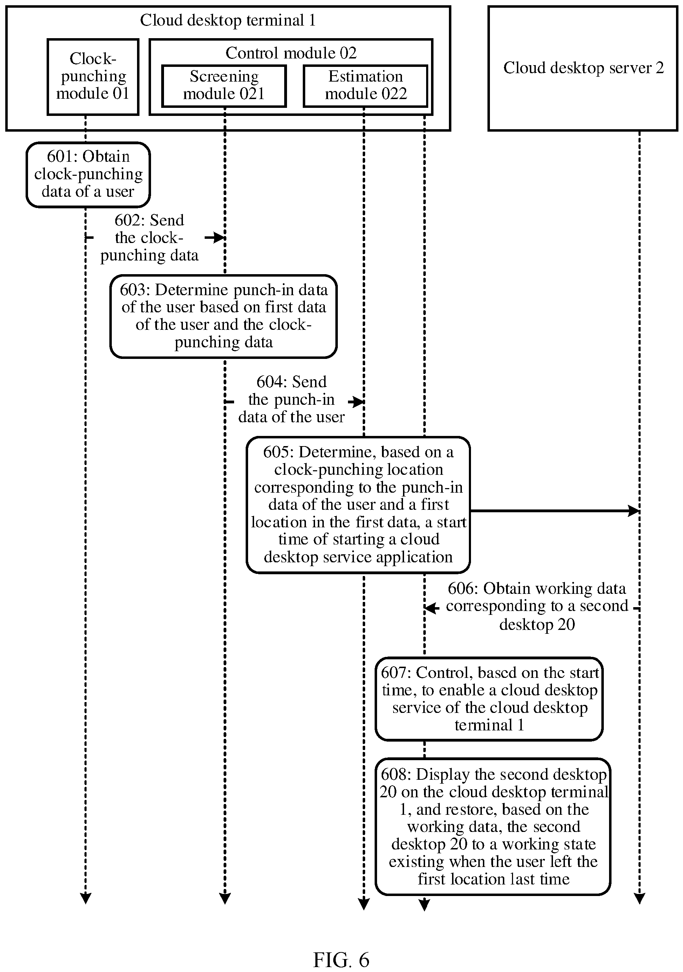

Based on the cloud desktop application system shown in FIG. 5, the following further describes an implementation process of a method for controlling a cloud desktop service application in this application with reference to FIG. 6 to FIG. 10.

FIG. 6 is a schematic flowchart of a method for controlling a cloud desktop service application according to this application. As shown in FIG. 6, the method includes the following steps.

601: The clock-punching module 01 obtains the clock-punching data of the user. In some implementations, the clock-punching module 01 obtains the clock-punching data of the user by using punching apparatuses disposed at different locations. For example, the clock-punching module 01 obtains the clock-punching data of the user by using a punching apparatus disposed on a shuttle bus, a company turnstile, or the like. In some other implementations, the clock-punching module 01 may obtain the clock-punching data of the user from a remote clock-punching APP installed on the terminal device of the user, for example, a remote clock-punching APP installed on a mobile phone, a tablet computer, or the like. This is not limited in this application.

In some implementations, the clock-punching data of the user includes data of the user punching the clock by using the foregoing terminal devices. In addition, the clock-punching data includes a clock-punching location, a clock-punching time, and the like of the user in each clock-punching. For example, the clock-punching data of the user A obtained by the clock-punching module 01 may be shown in Table 1.

**Table 1 Clock-punching data of the user A**

| Clock-punching number | Clock-punching location | Clock-punching time |
|---|---|---|
| 1^{st} clock-punching | Shuttle bus | 6:31 |
| 2^{nd} clock-punching | Company turnstile | 7:40 |
| 3^{rd} clock-punching | Access a company Wi-Fi | 7:55 |
| 4^{th} clock-punching | Company tea room | 8:30 |
| ... | ... | ... |
| (N-1)^{th} clock-punching | Company turnstile | 18:30 |
| N^{th} clock-punching | Shuttle bus | 18:45 |

It may be understood that clock-punching data of another user obtained by the clock-punching module 01 may also be shown in the foregoing Table 1. In addition, it may be further understood that in some implementations, the clock-punching data may further include other data, for example, data indicating an ownership of clock-punching information, such as an identity (ID) of the user, a work card number of the user, or a mobile phone number of the user. This is not limited in this application.

602: The clock-punching module 01 sends the clock-punching data to a screening module 021.

603: The screening module 021 determines current-day punch-in data of the user based on first data of the user and the clock-punching data.

In some implementations, the current-day punch-in data of the user refers to valid punch-in data of the user, that is, the first clock-punching data. It may be understood that, although the clock-punching data of the user is collected, it cannot be determined, only based on the clock-punching data, that the user may definitely arrive at the office location, or the user has a plurality of current-day clock-punching records, and not all of the clock-punching records are the punch-in data of the user.

For example, current-day clock-punching data of the user B (August 6, 2022) is shown in Table 2 below.

**Table 2 Clock-punching data of the user B**

| Clock-punching number | Clock-punching location | Clock-punching time |
|---|---|---|
| 1^{st} clock-punching | Shuttle bus | 7:40 |
| 2^{nd} clock-punching | Shuttle bus | 18:45 |

It can only be determined, based on the clock-punching data of the user B, that the user B has taken the shuttle bus, but it cannot be determined whether the user B arrives at the office location.

For another example, current-day clock-punching data of a user C (August 6, 2022) is shown in Table 3 below.

**Table 3 Clock-punching data of the user C**

| Clock-punching number | Clock-punching location | Clock-punching time |
|---|---|---|
| 1^{st} clock-punching | Company turnstile | 02:30 |
| 2^{nd} clock-punching | Company turnstile | 8:35 |
| 3^{rd} clock-punching | Conference room A | 10:10 |
| 4^{th} clock-punching | Company turnstile | 11:40 |
| 5^{th} clock-punching | Company turnstile | 12:40 |
| 6^{th} clock-punching | Company tea room | 13:00 |
| 7^{th} clock-punching | Company turnstile | 18:30 |
| 8^{th} clock-punching | Shuttle bus | 18:45 |

It can be learned from the foregoing Table 3 that the clock-punching data of the user C includes a plurality of clock-punching records, but actually, the punch-in data of the user C is "the 1^{st} clock-punching at the company turnstile", and other clock-punching data cannot be used as the punch-in data of the user C.

Therefore, the clock-punching data of the user needs to be further screened based on the first data of the user recorded in the company IT module 04, to determine the current-day punch-in data of the user. In some implementations, the first data of the user is obtained by the screening module 021 from the company IT module 03. In some other implementations, the first data of the user may also be obtained by the screening module 021 from the database 023. This is not limited in this application. In addition, that the screening module 021 obtains the first data of the user may be: after receiving clock-punching data of a user obtained by the clock-punching module 01, obtaining first data of the user from the company IT module 03 or the database 023; or may be: obtaining first data of all users of the company in advance, caching the data, and after receiving clock-punching data of a user obtained by the clock-punching module 01, obtaining, based on an ID, a work card, contact information, and the like of the user in the clock-punching data of the user, first data corresponding to the user from the cached data. This is not limited in this application.

In some implementations, the first data of the user includes but is not limited to data such as an office location of the user, ask for leave data of the user, historical punch-in data of the user, a work card number of the user, and contact information of the user. This is not limited in this application. In some implementations, a usual on-work time of a user and a leave record of the user may be determined based on user data recorded in the company IT module 04, and then the current-day punch-in data of the user of the user may be determined based on a time of the clock-punching data of the user and data such as the usual on-work time and the leave record of the user.

For example, if user data indicates that the user "asks for leave" on a day, even if the clock-punching module 01 collects clock-punching data of the user, the clock-punching data is not used as the current-day punch-in data of the user. More specifically, for example, the clock-punching data of the user B shown in Table 2 is still used as an example. It is assumed that first data of the user B is shown in Table 4 below.

**Table 4 First data of the user B**

| Work station | 2022-204C |
|---|---|
| August 6, 2022 | Going out |
| August 5, 2022 | On-work: 9:00 Off-work: 19:00 |
| August 4, 2022 | On-work: 8:00 Off-work: 20:00 |
| August 3, 2022 | On-work: 9:00 Off-work: 19:00 |
| August 2, 2022 | On-work: 8:00 Off-work: 18:00 |
| August 1, 2022 | On-work: 9:00 Off-work: 19:00 |

It can be learned from the first data of the user B that, on August 6, 2022, an attendance status of the user B is "Going out". Therefore, any piece of clock-punching data of the user B shown in the foregoing Table 2 cannot be used as current-day punch-in data of the user B.

It should be noted that, for a case that the attendance status of the user B is "Going out", but the user B actually goes to the office location to process a work item, the user B may manually enable the cloud desktop service for an office work. This is not limited in this application.

For another example, if the usual on-work time of the user is between 6:30 and 9:30, even if the clock-punching module 01 collects the clock-punching data of the user at 1:30, similarly, the clock-punching data is not used as current-day punch-in data of the user. More specifically, for example, the clock-punching data of the user C shown in Table 3 is used as an example. It is assumed that first data of the user C is shown in Table 5 below.

**Table 5 First data of the user C**

| Work station | 2022-210D |
|---|---|
| August 6, 2022 | Normal attendance |
| August 5, 2022 | On-work: 6:30 Off-work: 19:00 |
| August 4, 2022 | On-work: 6:40 Off-work: 20:00 |
| August 3, 2022 | On-work: 9:00 Off-work: 19:00 |
| August 2, 2022 | On-work: 8:00 Off-work: 18:00 |
| August 1, 2022 | On-work: 9:00 Off-work: 19:00 |

It can be learned, based on the first data of the user C, that a usual on-work time (that is, a first preset time) of the user C is 6:30 to 9:00, and on August 6, 2022, an attendance status of the user C is "Normal attendance", that is, the user C has no record of asking for leave, going out, or the like. Therefore, current-day punch-in data of the user may be determined from the clock-punching data of the user C shown in the foregoing Table 3. In addition, because a time corresponding to a 1^{st} piece of clock-punching data in the clock-punching data of the user is apparently not within a period from 6:30 to 9:00, this piece of clock-punching data cannot be used as the current-day punch-in data of the user. In this case, the current-day punch-in data of the user needs to be determined based on other clock-punching data.

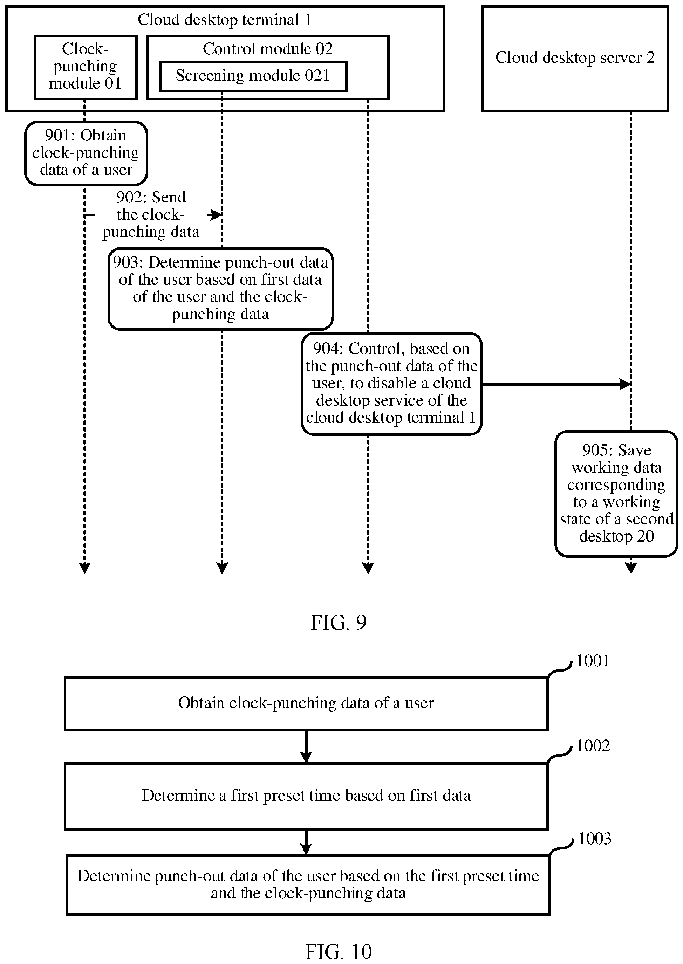

The foregoing describes, as an example, a manner of determining, from the clock-punching data based on the first data of the user, the current-day punch-in data of the user. The following describes this in detail with reference to FIG. 10.

604: The screening module 021 sends the current-day punch-in data of the user to the estimation module 022.

605: The estimation module 022 determines, based on a clock-punching location corresponding to the current-day punch-in data of the user and a first location in the first data, a start time of starting the cloud desktop service application.

In some implementations, the estimation module 022 may calculate a distance between the clock-punching location and the first location, calculate, with reference to a travel manner of the user, first duration for which the user is from the clock-punching location to the first location, and then determine the start time based on a clock-punching time corresponding to current-day punch-in data and the first duration. In other words, essentially, the estimation module 022 determines, based on a speed corresponding to the travel manner of the user, duration for which the user is from a departure place to a destination. A manner of calculating, based on the travel manner of the user, the duration required by the user from the departure place to the destination may be known by a person skilled in the art without creative efforts, and details are not described in this application.

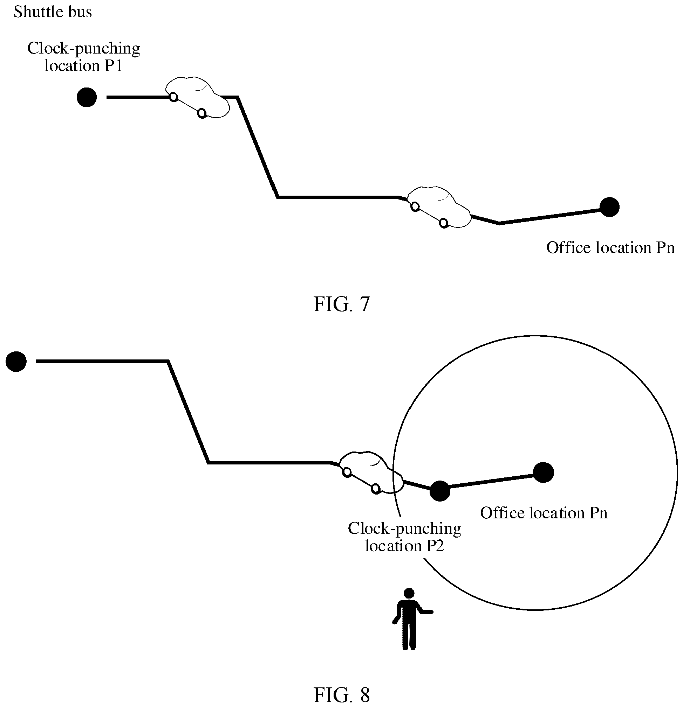

For example, as shown in FIG. 7, the user takes a shuttle bus for commuting, and the clock-punching location is a user boarding location P1. If a distance between the clock-punching location P1 of the user and a first location Pn is X meters, and a driving speed of the shuttle bus is n meters/hour, it may be calculated that the first duration for which the user is from the clock-punching location P1 to the first location Pn is X/n hours. X is generally an empirical value. For example, a value of X may be 15 km, and may be obtained by collecting statistics on a distance between a location at which the user usually takes a shuttle bus and an office location of the user by using the company IT module 04. The driving speed of the shuttle bus is also an empirical value, for example, a value of the driving speed may be 40 km/h.

For another example, as shown in FIG. 8, the user punches the clock at a clock-punching location P2 close to the office location by using a mobile phone APP. If a distance between the clock-punching location P2 of the user and the first location Pn is Y meters, the estimation module 022 may further calculate, based on the travel manner of the user, duration required by the user from P2 to Pn. Y meters is generally an empirical value, and a value of Y is generally 100 m to 3000 m. It may be understood that, when the user does not take the shuttle bus to the first location, regardless of whether the user chooses to use the mobile phone APP to remotely punch the clock or enter the company turnstile for facial recognition, iris recognition, fingerprint recognition, or the like to clock-punching, a travel manner corresponding to the distance between the clock-punching location of the user and the first location is generally walking. In other words, when the user does not get to the first location by taking the shuttle bus, the travel manner of the user is walking by default. Therefore, for the case shown in FIG. 8, the first duration for which the user is from P2 to Pn may be calculated by using the distance from P2 to Pn and a walking speed Z meters/hour (for example, 4 km/hour to 5 km/hour) of the user.

606: The control module 02 obtains, from the cloud desktop server 2, the working data corresponding to the second desktop 20. In some implementations, the second desktop 20 in the cloud desktop server 2 may be bound to a specific cloud desktop terminal 1, that is, the control module 02 may determine, based on the cloud desktop terminal 1 corresponding to the user, the second desktop 20 obtained from the cloud desktop server 2. That the second desktop 20 is bound to the cloud desktop terminal 1 may be that identification data of the second desktop 20 is related to identification data of the cloud desktop terminal 1. For example, the identification data of the second desktop 20 and the identification data of the cloud desktop terminal 1 have a same number. This is not limited in this application. In some other implementations, the second desktop 20 in the cloud desktop server 2 may also be bound to related information in the first data of the user, for example, bound to contact information, work card data, and the like of the user. This is not limited in this application.

607: The control module 02 controls, based on the start time of the cloud desktop service application, to enable a cloud desktop service of the cloud desktop terminal 1 of the user. After the time at which the cloud desktop service application is started, the cloud desktop service of the cloud desktop terminal 1 of the user may be controlled to be enabled.

In some implementations, statistics on duration for enabling the cloud desktop service of the cloud desktop terminal 1 for the user for a plurality of times may be collected, then average duration T1 (or a median) for enabling the cloud desktop service is calculated, and then the cloud desktop service of the cloud desktop terminal 1 is enabled before at least a moment T1 at which the user arrives at the office location. The collecting statistics on duration for enabling the cloud desktop service of the cloud desktop terminal 1 for the user for a plurality of times may be collecting statistics on duration for enabling the cloud desktop service for one user for a plurality of times, or may be collecting statistics on duration for enabling the cloud desktop service for a plurality of users for a plurality of times. For example, if duration for which a user D is from a clock-punching location to a first location is calculated, statistics on duration for enabling the cloud desktop service for the user D for a plurality of times may be collected, or statistics on duration for enabling the cloud desktop service for a plurality of users including the user D for a plurality of times may be collected. This is not limited in this application.

For example, the statistics on duration for enabling the cloud desktop service of the cloud desktop terminal 1 for the user D for a plurality of times is shown in Table 6 below.

**Table 6 Duration for enabling the cloud desktop service of the cloud desktop terminal 1 for the user D for a plurality of times**

| | | |
|---|---|---|
| 1^{st} time | 120 seconds | Time |
| 2^{nd} time | 100 seconds | August 5, 2022 |
| 3^{rd} time | 98 seconds | August 4, 2022 |
| 4^{th} time | 110 seconds | August 3, 2022 |
| 5^{th} time | 105 seconds | August 2, 2022 |

Based on the record in Table 6, it can be learned that average duration for enabling the cloud desktop service of the cloud desktop terminal 1 for the user D is T1=(120+100+98+110+105)/5=106 seconds. Therefore, the cloud desktop service of the cloud desktop terminal 1 may be enabled at least 106 seconds before the user arrives at the office location. For example, it is assumed that a 2^{nd} clock-punching time of the user determined according to 603 is 7:40, and the first duration for arriving at the office location from the clock-punching location is 30 minutes, that is, an estimated time at which the user arrives at the office location from the clock-punching location is 8:10. Therefore, the control module 02 may enable the cloud desktop service of the cloud desktop terminal 1 106 seconds before 8:10.

In addition, for a user, because the user has different working states when leaving the office location, for example, applications used and projects processed by using the application are different for a user E when leaving the office location, it may be understood that, for a user, when the control module 02 controls the cloud desktop service to be automatically disabled, times consumed for saving current working states of the user in the memory of the cloud desktop server 2 are also different. Correspondingly, times consumed for the control module 02 to control the cloud desktop service of the user to be enabled and restored to the working state existing when the user left the office location last time are also different.

Specifically, for a complex working state in which the user starts a large quantity of applications and processes a large quantity of projects, when the control module 02 controls the cloud desktop service to be automatically disabled, more time is required to save the working state of the user in the memory. Correspondingly, a relatively long time is consumed for the control module 02 to control the cloud desktop service of the user to be enabled and restored to the working state existing when the user left the office location last time. On the contrary, for a simple working state in which the user starts a small quantity of applications and processes a small quantity of projects, when the control module 02 controls the cloud desktop service to be automatically disabled, less time is required to save the working state of the user in the memory. Correspondingly, a relatively short time is consumed for the control module 02 to control the cloud desktop service of the user to be enabled and restored to the working state existing when the user left the office location last time.

Therefore, in some implementations, when controlling, based on the first duration, a cloud desktop service of a cloud desktop terminal 1 of a user to be enabled, the control module 02 may further control, with reference to duration consumed when the control module 02 controlled the user to disable the cloud desktop service last time, the cloud desktop service to be enabled. For ease of description, disabling duration consumed when the control module 02 controlled a user to disable the cloud desktop service last time is referred to as second duration.

For example, it is assumed that a working state and corresponding second duration existing when a user F leaves the office location on August 6, 2022 are shown in Table 7 below.

**Table 7 Working state and second duration existing when the user F leaves the office location**

| Started applications | Processed items | Second duration |
|---|---|---|
| Document application 21 | Document 1 and Document 2 | 115 seconds |
| Programming application | Project 1 | |
| Web browser | Web page 1, Web page 2, Web page 3, ..., and Web page 4 | |
| Social application | WeChat | |

It is assumed that the working state existing when the user F leaves the office location on August 7, 2022 is shown in Table 8 below.

**Table 8 Working state and second duration existing when the user F leaves the office location**

| Started applications | Processed items | Second duration |
|---|---|---|
| Programming application | Project 1 and Project 2 | 114 seconds |
| Web browser | Web page 1, Web page 2, Web page 3, ..., and Web page 4 | |
| Social application | WeChat | |

It can be learned by comparing Table 7 with Table 8 that, applications started and items processed are different when the user F leaves the office location, and second duration consumed for the control module 02 to control the cloud desktop service to be disabled and save the working state of the user F to the memory is also different from each other.

Therefore, the control module 02 may determine by synthesis, based on the first duration and the second duration, a time to control a cloud desktop service of a cloud desktop terminal 1 of the user F to be enabled.

For example, it is assumed that current-day punch-in data of the user of the user F is "punch in on a shuttle bus at 8:00", the first duration is 30 minutes, and the second duration is 115 seconds. In this case, the control module 02 may control the cloud desktop service of the user F to be enabled at least 115 seconds before 8:30. In this way, after arriving at a work station, the user F may quickly enter a working state, thereby improving user experience.

608: The control module 02 controls the cloud desktop terminal 1 to display the second desktop 20, and restores, based on the working data, the second desktop 20 to a working state existing when the user left the first location last time.

According to the foregoing method, valid punch-in data of a user is first determined, and then a time at which the user arrives at an office location from the clock-punching location is estimated based on a punch-in location and a clock-punching time of the user and a travel manner of the user. Before the user arrives at the office location, with reference to duration for disabling a cloud desktop service when the user left the office location last time, the cloud desktop terminal 1 is controlled to enable the cloud desktop service, and restore to a working state existing when the user left the office location last time, to avoid that the user waits for the cloud desktop service to be enabled, or duration for which the user waits for the cloud desktop service to be enabled is reduced, and the user may quickly enter a working state after arriving at the office location, thereby improving user experience.

According to the foregoing method, the control module 02 determines, based on the first duration, duration for controlling the cloud desktop service of the cloud desktop terminal 1 to be enabled, to reduce or avoid duration for which the user waits for the cloud desktop service to be enabled and reduce power consumption of the cloud desktop terminal 1. However, it may be understood that, to ensure that the user does not need to wait for the cloud desktop service to be enabled, and improve user experience, if necessary, in some implementations, the control module 02 may also control the cloud desktop terminal 1 to enable the cloud desktop service after determining current-day punch-in data of the user. For example, it is assumed that in the current-day punch-in data of the user, a clock-punching time is when accessing a company Wi-Fi (for example, 8:45), and a clock-punching location is near a company. In this case, the first duration is actually short, that is, after the cloud desktop terminal 1 is controlled to enable the cloud desktop service based on the clock-punching location in the current-day punch-in data of the user, the cloud desktop terminal 1 does not consume too much power (waiting for being used by the user). Therefore, after the current-day punch-in data of the user is determined, the cloud desktop terminal 1 may be controlled to enable the cloud desktop service. That is, in the foregoing method, after the current-day punch-in data of the user is determined in 603, the control module 02 may control the cloud desktop terminal 1 to enable the cloud desktop service.

An interaction flowchart shown in FIG. 6 shows a method for estimating, based on the current-day punch-in data of the user, duration for which the user arrives at the office location from the clock-punching location, and controlling the user cloud desktop terminal 1 to enable the cloud desktop service and restore to the working state of the user existing when the user left the office location last time in the method for controlling a cloud desktop service application in this application.

With reference to FIG. 9, the following describes a process of controlling, based on valid punch-out data of a user, that is, second clock-punching data, a cloud desktop terminal 1 of a user to disable a cloud desktop service. For a part that is the same as that in FIG. 6, refer to the foregoing related descriptions. Details are not described below again. Specifically, as shown in FIG. 9, the method includes the following steps.

901: A clock-punching module 01 obtains clock-punching data of a user. In some implementations, for a manner of obtaining the clock-punching data of the user, refer to related descriptions in 601. Details are not described herein again.

902: The clock-punching module 01 sends the clock-punching data to a screening module 021.

903: Determine current-day punch-out data of the user based on first data of the user and the clock-punching data.

In some implementations, the current-day punch-out data of the user refers to valid punch-out data of the user (that is, the second clock-punching data). It may be understood that, generally, the valid punch-out data of the user is last current-day clock-punching data of the user. However, some users may work overtime until the next day. In this case, last current-day clock-punching data of these users cannot be used as current-day punch-out data of the users. Alternatively, some users may forget to punch out. In this case, last current-day clock-punching data of the user cannot be used as current-day punch-out data before a specified off-work time. There are other cases not listed herein. In these cases, the last current-day clock-punching data of the user cannot be used as the current-day punch-out data of the user. Instead, the current-day punch-out data of the user of the user should be determined by case. A specific determining process is described in detail below, and details are not described herein again.

904: A control module 02 controls, based on the current-day punch-out data of the user, to disable a cloud desktop service of a cloud desktop terminal 1 of the user.

In some implementations, after the current-day punch-out data of the user is determined, it may be determined that the user is off work. Therefore, the control module 02 may control, after a first preset duration, the cloud desktop service of the cloud desktop terminal 1 of the user to be disabled. The first preset duration is an empirical value or an experimental value, and a value of the first preset duration may be, for example, 10 minutes.

905: The control module 904 controls a cloud desktop server 2 to save working data corresponding to a working state of a second desktop 20.

In some implementations, to enable the user to enter a working state as soon as possible after the user arrives at an office location next time, and further reduce a time for the user to start an application on the second desktop 20, the control module 02 controls, when controlling the cloud desktop service of the cloud desktop terminal 1 of the user to be disabled, the cloud desktop server 2 to simultaneously cache the working state of the second desktop 20 existing when the user leaves the office location into a memory of the cloud desktop server 2, and controls the cloud desktop server 2 to record and save second duration (that is, disabling duration) used for disabling the cloud desktop service and caching the working state to the cloud desktop server 2 this time. The second duration is also used as a time element that needs to be considered when the cloud desktop service is enabled next time.

In some implementations, the control module 02 may also record and save, to a database 023, the second duration used for disabling the cloud desktop service and caching the working state to the cloud desktop server 2 this time. This is not limited in this application. According to the foregoing method, the cloud desktop service of the cloud desktop terminal 1 of the user may be disabled after it is determined that the user is off work. In addition, because the second duration required for disabling the cloud desktop service and caching the working state is recorded, a time basis is provided for enabling the cloud desktop service and quickly restoring to an office state next time, so that enabling and disabling of the cloud desktop service are closer to a use habit of the user, thereby improving user experience.

The following describes a specific manner of determining current-day punch-in data of the user in the foregoing method.

Corresponding to 603, the following describes, with reference to FIG. 10, a method for determining current-day punch-in data of the user. Before this, it should be noted that the following method for determining current-day punch-in data of the user is a relatively accurate method obtained after statistics on a working time and the like of a user are collected by using big data, and is not the unique method for determining current-day punch-in data of the user. It may be understood that the method is implemented by the cloud desktop terminal 1. More specifically, the method may be implemented in cooperation with the clock-punching module 01, the control module 02, and the like that are deployed in the cloud desktop terminal 1. This is not limited in this application. For ease of description, the following uses an example in which the method is executed by the cloud desktop terminal 1.

Specifically, the method includes the following steps.

1001: Obtain clock-punching data of a user. In some implementations, for a manner of obtaining the clock-punching data of the user, refer to related descriptions in 601. Details are not described herein again.

1002: Determine a first preset time of the user based on first data.

In some implementations, the first data includes data such as historical punch-in data of the user (that is, current-day punch-in data of the user), an office location of the user (for example, a specific work station of the user), a user ID, a user work card, and a user attendance status.

In some implementations, the first preset time indicates a usual on-work time or a historical on-work time of the user. In some implementations, the first preset time is a statistical value obtained by collecting statistics on working hours of a user in second preset duration based on data. For example, the first preset time may be a time range from an earliest on-work time to a latest on-work time of the user every day in the second preset duration. For example, the first data of the user is recorded as shown in the foregoing Table 5, and it can be learned from the foregoing Table 5 that the first preset time of the user is from 6:30 to 9:00. In some other implementations, the first preset time may be a specific time value that is different from an average on-work time of the user in the second preset duration by a threshold. For example, if the average on-work time of the user in 30 days is 8:30, the first preset time may be a time that is one hour different from 8:30, for example, 7:30. The second preset duration is an empirical value or an experimental value. For example, a value of the second preset duration may be 22 days. This is not limited in this application.

In some implementations, the first preset time may be further determined with reference to the attendance status of the user.

For example, if the attendance status of the user on a day is going out, it indicates that the user may not arrive at the office location on the day, that is, the user does not have a corresponding first preset time on the day, or first clock-punching data of the user on the day is invalid clock-punching data and cannot be used as current-day punch-in data of the user. It may be understood that, if an attendance status of the user on a day is going out, but the user actually still arrives at the office location for office work, in this case, the user may manually enable the cloud desktop service for the office work. This is not limited in this application.

For another example, if an attendance status of the user on a day is "leave for personal affairs: 9:00 to 11:00", correspondingly, the first preset time is a time after the user finishes the personal affairs, that is, 11:00.

1003: Determine the current-day punch-in data of the user based on the first preset time and the clock-punching data.

It may be understood that, after the usual on-work time of the user is determined, the current-day punch-in data of the user may be determined based on a time corresponding to the obtained clock-punching data of the user, that is, clock-punching data with a clock-punching time that is different from the first preset time by a first threshold is used as the current-day punch-in data of the user. The first threshold is an empirical value or an experimental value, and a value of the first threshold may be, for example, any value from 0 to 20 minutes. This is not limited in this application.

For example, the foregoing Table 5 is used as an example. It can be learned from Table 5 that the first preset time of the user C is from 6:30 to 9:00. In this case, the current-day punch-in data of the user is clock-punching data in a clock-punching time from 6:30 to 9:00, that is, "2^{nd} clock-punching data: company turnstile-8:35" shown in Table 3.

According to the foregoing method, the usual on-work time of the user may be determined based on the first data of the user, to determine current-day punch-in data of the user, and the clock-punching location of the user continues to be determined based on the current-day punch-in data of the user, to subsequently determine the start time based on the clock-punching location of the user, a first location, and a travel manner of the user.

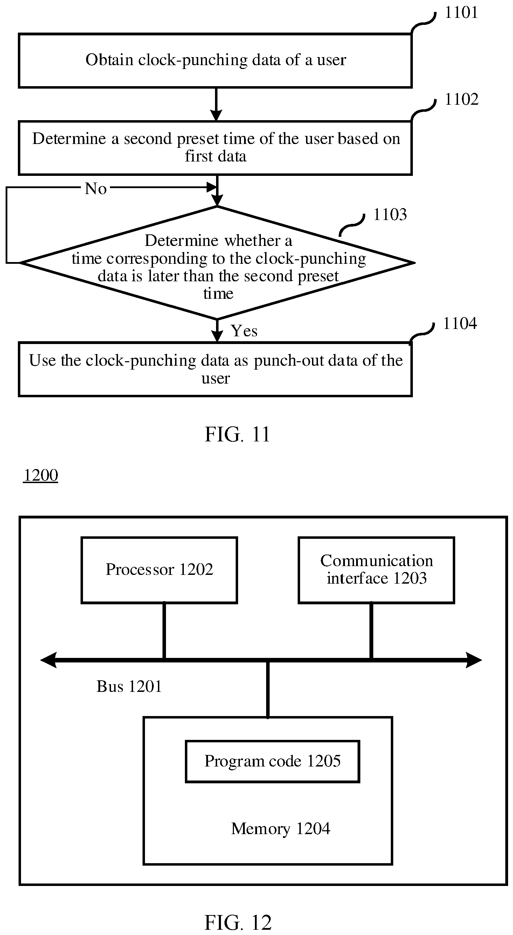

Corresponding to 903, the following describes, with reference to FIG. 11, a method for determining current-day punch-out data of the user. Before this, it should be noted that the following method for determining current-day punch-out data of the user is a relatively accurate method obtained after statistics on a working time and the like of a user are collected by using big data, and is not the unique method for determining current-day punch-out data of the user. It may be understood that the method is implemented by the cloud desktop terminal 1. More specifically, the method may be implemented in cooperation with the clock-punching module 01, the control module 02, and the like that are deployed in the cloud desktop terminal 1. This is not limited in this application. For ease of description, the following uses an example in which the method is executed by the cloud desktop terminal 1.

Specifically, the method includes the following steps.

1101: Obtain clock-punching data of a user. Reference may be made to the descriptions in 1001, and details are not repeated herein again.

1102: Determine a second preset time of the user based on first data. In some implementations, the second preset time indicates a usual off-work time or a historical off-work time of the user. For a manner of determining the second preset time of the user, refer to the foregoing manner of determining the second preset time of the user based on the first data. Details are not described herein again.

1103: Determine whether a time corresponding to the clock-punching data is later than the second preset time.

1104: If the time corresponding to the clock-punching data is later than the second preset time, the clock-punching data is used as current-day punch-out data of the user. In other words, only clock-punching data obtained at or after an off-work time of the user is used as the current-day punch-out data of the user.

In some implementations, in a case that the second preset time is a time range, clock-punching data within the time range, more specifically, a 1^{st} piece of clock-punching data is used as the current-day punch-out data of the user. For example, as shown in the foregoing Table 5, if the second preset time is 18:00-20:00, data "company turnstile: 18:30" of 7^{th} clock-punching of the user C in Table 3 is the current-day punch-out data of the user of the user C.

In a case that the second preset time is a time value, if a time difference between the first clock-punching data and the second preset time is less than or equal to a second threshold, a 1^{st} piece of clock-punching data that is obtained after the second preset time for duration corresponding to the second threshold is used as the current-day punch-out data of the user (that is, second clock-punching data). The second threshold is an empirical value or an experimental value. This is not limited in this application. For example, if the second time is 19:30, and the second threshold is 30 minutes, a 1^{st} piece of first clock-punching data (for example, clock-punching data at 20:20) after 20:00 is used as the current-day punch-out data of the user.

After the current-day punch-out data of the user is determined, it may be determined that the user leaves the office location, that is, 903 may be performed to control disabling a cloud desktop service of the cloud desktop terminal 1 of the user. For a specific process, refer to the foregoing related descriptions, and details are not described herein again.

For the foregoing method 1102, if the time corresponding to the clock-punching data is not after the second preset time, the clock-punching data is considered by default as invalid punch-out data of the user within a working time. Therefore, next clock-punching data of the user needs to be obtained again, and whether a time corresponding to the next clock-punching data is after the second preset time is determined, that is, 1102 continues to be performed.

In addition, in some implementations, if clock-punching data is still not obtained (or no clock-punching behavior is detected) within preset duration (that is, third preset duration) after the second preset time, it is considered by default that the user forgets to punch out. In this case, the cloud desktop service is disabled, and a cloud desktop server 1 is controlled to save a current working state of a second desktop 20 of the cloud desktop terminal 1. In addition, second duration (that is, the disabling duration) consumed for disabling the cloud desktop service and saving the working state to the cloud desktop server 2 this time is recorded and saved. The preset duration is an empirical value or an experimental value.

An implementation method of this application further provides an electronic device 1200. The electronic device is specifically configured to implement a function of a cloud desktop server 2 in a cloud desktop system shown in FIG. 1. Next, the electronic device is described in detail from a perspective of hardware materialization.

FIG. 12 is a diagram of a structure of a cloud desktop server 2. As shown in FIG. 12, the cloud desktop server 2 includes a bus 1201, a processor 1202, a communication interface 1203, and a memory 1204. The processor 1202, the memory 1204, and the communication interface 1203 communicate with each other through the bus 1201.

The bus 1201 may be a peripheral component interconnect (peripheral component interconnect, PCI) bus, an extended industry standard architecture (extended industry standard architecture, EISA) bus, or the like. The bus 1201 may be classified into an address bus, a data bus, a control bus, and the like. For ease of representation, only one thick line represents the bus in FIG. 12, but this does not mean that there is only one bus or only one type of bus.

The processor 1202 may be any one or more of the following processors: a central processing unit (central processing unit CPU), a graphics processing unit (graphics processing unit, GPU), a micro processor (micro processor, MP), a digital signal processor (digital signal processor, DSP), or the like.

The communication interface 1203 is configured to communicate with an external device. Specifically, the communication interface 1203 may receive an encoding event sent by a cloud desktop terminal 1, or send encoded data output by a second desktop 20 to the cloud desktop terminal 1 corresponding to the second desktop 20, or the like.

The memory 1204 may include a volatile memory (volatile memory), for example, a random access memory (random access memory, RAM). The memory 1204 may further include a non-volatile memory (non-volatile memory), for example, a read-only memory (read-only memory, ROM), a flash memory, a hard disk drive (hard disk drive, HDD), or a solid-state drive (solid-state drive, SSD).

The memory 1204 stores executable program code 1205, and the processor 1202 executes the executable program code to perform a method for controlling a cloud desktop service application provided above.

An implementation method of this application further provides an electronic device. The electronic device is specifically configured to implement a function of a cloud desktop terminal 1 in a cloud desktop system shown in FIG. 1. Next, the electronic device is described in detail from a perspective of hardware materialization.

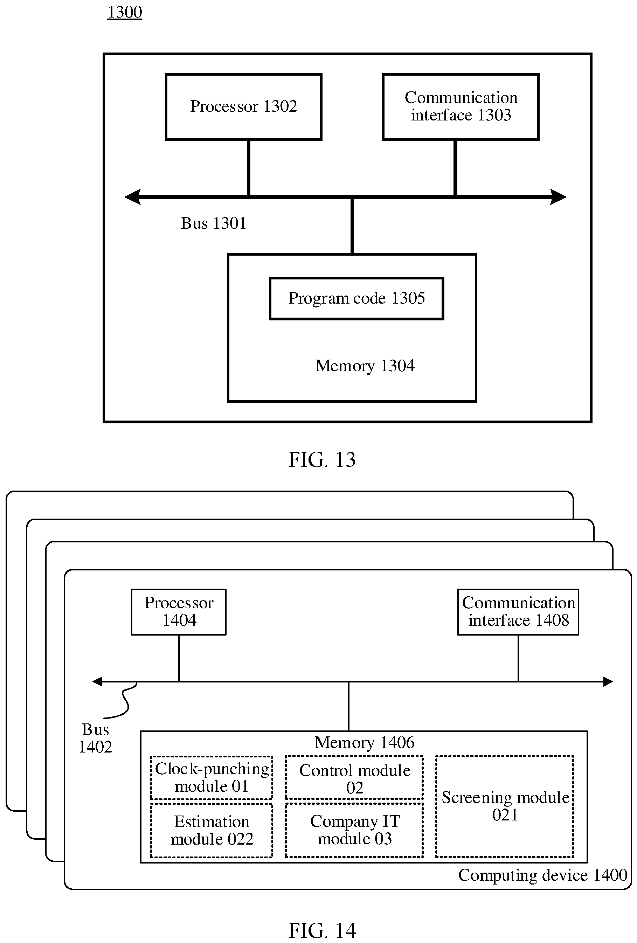

FIG. 13 is a diagram of a structure of an electronic device 1300. As shown in FIG. 13, the electronic device 1300 includes a bus 1301, a processor 1302, a communication interface 1303, and a memory 1304.

The processor 1302, the memory 1304, and the communication interface 1303 communicate with each other through the bus 1301.

The bus 1301 may be a peripheral component interconnect PCI bus, an extended industry standard architecture EISA bus, or the like. Buses may be classified into an address bus, a data bus, a control bus, and the like. For ease of representation, only one bold line is used to represent the bus in FIG. 13, but this does not mean that there is only one bus or only one type of bus.

The processor 1302 may be any one or more of the following processors: a central processing unit CPU, a graphics processing unit GPU, a micro processor MP, a digital signal processor DSP, or the like.

The communication interface 1303 is configured to communicate with an external device. Specifically, the communication interface 1303 may send an encoding event to a cloud desktop server 2, or receive encoded data sent by a cloud desktop server 1.

The memory 1304 may include a volatile memory, for example, a random access memory RAM. The memory 1304 may further include a non-volatile memory, for example, a read-only memory ROM, a flash memory, a hard disk drive HDD, or a solid-state drive SSD.

The memory 1304 stores executable program code 1305, and the processor 1302 executes the executable program code to perform a method for controlling a cloud desktop service application provided above.

Further, the electronic device 1300 further includes an input/output device. The input/output device may include a display. Based on different manufacturing materials, the display may be classified into a liquid crystal display (liquid crystal display, LCD), an organic light emitting diode (organic light emitting diode, OLED) display, and the like. The display may present a first desktop 10 and a second desktop 20.

An embodiment of this application further provides a computing device cluster. The computing device cluster includes at least one computing device. The computing device may be a server, for example, a central server, an edge server, or a local server in a local data center. In some embodiments, the computing device may alternatively be a terminal device, for example, a desktop computer, a notebook computer, or a smartphone.

As shown in FIG. 14, the computing device cluster includes at least one computing device 1400. A memory 1406 in one or more computing devices 1400 in the computing device cluster may store same instructions for performing the method for controlling a cloud desktop service application.

In some possible implementations, the memory 1406 of the one or more computing devices 1400 in the computing device cluster may also separately store some instructions for performing the method for controlling a cloud desktop service application. In other words, a combination of the one or more computing devices 1400 may jointly execute the instructions for performing the method for controlling a cloud desktop service application.

It should be noted that memories 1406 of different computing devices 1400 in the computing device cluster may store different instructions respectively used to perform some functions of a cloud desktop terminal 1. To be specific, instructions stored in memories 106 in different computing devices 100 may implement functions of one or more of the following modules: a clock-punching module 01, a control module 02, a screening module 021, an estimation module 022, a database 023, and a company IT module 03.

In some possible implementations, the one or more computing devices in the computing device cluster may be connected through a network. The network may be a wide area network, a local area network, or the like.

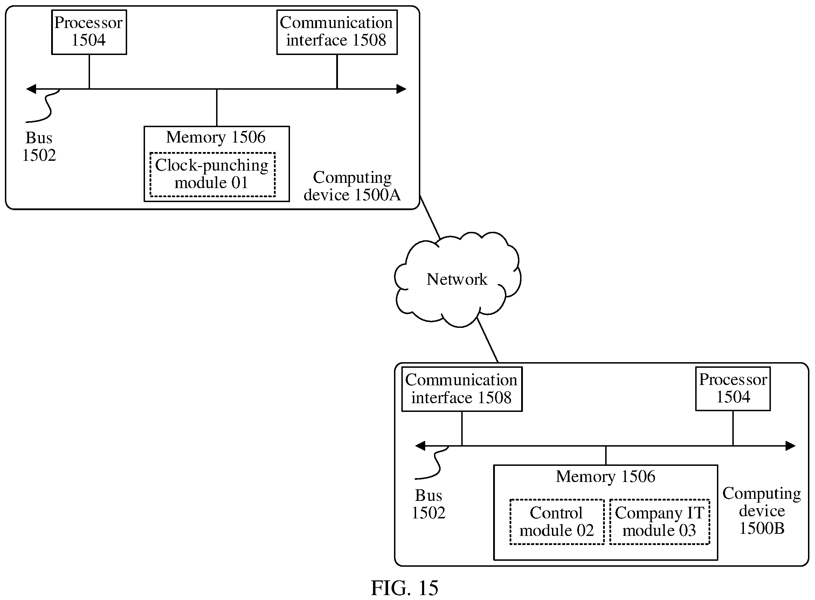

FIG. 15 shows a possible implementation. As shown in FIG. 15, two computing devices 1500A and 1500B are connected through a network. Specifically, each computing device is connected to the network through a communication interface of the computing device. In this possible implementation, a memory 1506 of the computing device 1500A stores an instruction for performing a function of the clock-punching module 01. In addition, the memory 1506 in the computing device 1500B stores instructions for executing functions of the control module 02 and the company IT module 03.

A connection manner between computing device clusters shown in FIG. 15 may be that, in consideration of that clock-punching data of a user and attendance data of the user need to be obtained in the method for controlling a cloud desktop service application provided in this application, and these pieces of data are analyzed to determine punch-in data and punch-out data of the user, it is considered that functions implemented by the clock-punching module 01 and the control module 02 are executed by the computing device 1500B.

It should be understood that functions of the computing device 1500A shown in FIG. 15 may alternatively be completed by a plurality of computing devices 1500. Similarly, functions of the computing device 1500B may alternatively be completed by a plurality of computing devices 1500.

An embodiment of this application further provides a computer program product including instructions. The computer program product may be a software or program product that includes instructions and that can run on a computing device or be stored in any usable medium. When the computer program product runs on at least one computing device, the at least one computing device is enabled to perform the method for controlling a cloud desktop service application.

Embodiments of this application further provide a computer-readable storage medium. The computer-readable storage medium may be any usable medium that can be stored by a computing device, or a data storage device, such as a data center, including one or more usable media. The usable medium may be a magnetic medium (for example, a floppy disk, a hard disk, or a magnetic tape), an optical medium (for example, a DVD), a semiconductor medium (for example, a solid-state drive), or the like. The computer-readable storage medium includes instructions, and the instructions instruct a computing device to perform the method for controlling a cloud desktop service application.

Finally, it should be noted that the foregoing embodiments are merely intended for describing the technical solutions of the present invention, but not for limiting the present invention. Although the present invention is described in detail with reference to the foregoing embodiments, a person of ordinary skill in the art should understand that they may still make modifications to the technical solutions described in the foregoing embodiments or make equivalent replacements to some technical features thereof, and these modifications or replacements do not deviate the essence of the corresponding technical solutions from the protection scope of the technical solutions of embodiments of the present invention.

## Claims

1. A method for controlling a cloud desktop service application, applied to a first electronic device, wherein the cloud desktop service application is installed on a first desktop of the first electronic device, the first electronic device is located at a first location, and the method comprises:
receiving first clock-punching data sent by a terminal device, wherein the first clock-punching data comprises a first clock-punching time and a clock-punching location of a user, and the clock-punching location is a geographical location of the terminal device at the first clock-punching time;
determining a start time of the cloud desktop service application based on the first clock-punching data and the first location; and
starting the cloud desktop service application based on the start time.

2. The method according to claim 1, wherein after the starting the cloud desktop service application, the method further comprises:
obtaining a second desktop from a second electronic device, and displaying the second desktop in the cloud desktop service application.

3. The method according to claim 1 or 2, wherein the method further comprises:
receiving second clock-punching data sent by the terminal device, and closing the cloud desktop service application.

4. The method according to claim 2, wherein the method further comprises:
receiving second clock-punching data sent by the terminal device, and controlling the second electronic device to save working data that corresponds to the second desktop and that exists when the cloud desktop service application is closed.

5. The method according to claim 1, wherein the start time is determined based on a distance between the first location and the clock-punching location, a travel manner of the user, and the first clock-punching time.

6. The method according to claim 3 or 4, wherein the method further comprises:
saving closing duration consumed for closing the cloud desktop service application.

7. The method according to claim 6, wherein the start time is determined based on a distance between the first location and the clock-punching location, a travel manner of the user, the first clock-punching time, and the closing duration.

8. The method according to claim 1 or 2, wherein before the determining a start time of the cloud desktop service application based on the first clock-punching data and the first location, the method further comprises:
determining that the first clock-punching time is a current-day on-work time of the user, wherein the current-day on-work time is a time with a difference from a first preset time less than a first threshold.

9. The method according to claim 3 or 4, wherein the second clock-punching data comprises a second clock-punching time of the user, and before the closing the cloud desktop service application, the method further comprises:
determining that the second clock-punching time is a current-day off-work time of the user, wherein the current-day off-work time is a time with a difference from a second preset time less than a second threshold.

10. The method according to claim 1 or 2, wherein the method further comprises:
if second clock-punching data is not received within third preset duration after a second preset time, closing the cloud desktop service application.

11. A readable medium, wherein the readable medium stores instructions, and when the instructions are executed on an electronic device, the electronic device is enabled to perform the method according to any one of claims 1 to 10.

12. An electronic device, wherein the electronic device comprises:
a memory, configured to store instructions executed by one or more processors of the electronic device; and
a processor, one of processors of the electronic device, configured to perform the method according to any one of claims 1 to 10.
